(19) Europäisches Patentamt
European Patent Office
Office européen des brevets

(11) Veröffentlichungsnummer: **0 152 115**
**B1**

# (12) EUROPÄISCHE PATENTSCHRIFT

(45) Veröffentlichungstag der Patentschrift: **08.02.89**

(51) Int. Cl.⁴: **C 08 F 2/00**

(21) Anmeldenummer: **85101652.7**

(22) Anmeldetag: **15.02.85**

(54) **Verfahren zur Herstellung von Polymerisaten ethylenisch ungesättigter Verbindungen.**

(30) Priorität: **15.02.84 DE 3405436**

(43) Veröffentlichungstag der Anmeldung: **21.08.85 Patentblatt 85/34**

(45) Bekanntmachung des Hinweises auf die Patenterteilung: **08.02.89 Patentblatt 89/6**

(84) Benannte Vertragsstaaten: **BE CH DE FR GB IT LI NL SE**

(56) Entgegenhaltungen:
**US-A- 3 515 709**
**US-A- 4 262 109**
**US-A- 4 299 747**

(73) Patentinhaber: **WACKER-CHEMIE GMBH, Prinzregentenstrasse 22, D-8000 München 22 (DE)**

(72) Erfinder: **Kleine, Willi, Dr. Dipl.-Chem., Schopenhauerweg 3, D-8263 Burghausen (DE)**
Erfinder: **Frey, Werner, Dr. Dipl.-Chem., Velsenstrasse 14, D-5060 Bergisch-Gladbach (DE)**
Erfinder: **Däweritz, Albrecht, Dr. Dipl.-Chem., Karl-Wagner-Strasse 11a, D-8202 Bad Aibling (DE)**

**EP 0 152 115 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bei der Herstellung von Polymerisaten ethylenisch ungesättigter Verbindungen durch Polymerisation dieser Monomeren, insbesondere von Vinylchlorid (VC) oder von Vinylchlorid zusammen mit mindestens einer mit VC copolymerisierbaren ethylenisch ungesättigten Verbindung, vorzugsweise in wässrigem Medium mittels freie Radikale bildendem Initiatorsystem in Gegenwart von üblichen Schutzkolloiden und/oder Emulgatoren und gegebenenfalls weiteren üblichen Zusätzen bilden sich im Verlauf der Polymerisation an den Oberflächen der Polymerisationsvorrichtung, d.h. des Reaktionsbehälters und den gegebenenfalls darin vorhandenen Einbauten, die mit Bestandteilen des Reaktionsgemisches in Berührung kommen, Polymerisatbeläge. Die als Beläge abgeschiedenen Polymeren können praktisch nicht weiterverarbeitet werden, sondern stellen üblicherweise Abfall dar, der überdies im Fall des VC-Polymerisats wegen der Giftigkeit des Monomeren aufgrund meist recht hoher Restmonomergehalte auch ein Umweltproblem darstellt. Des weiteren lösen sich Teile solcher Beläge vielfach auch während der Polymerisation von den genannten Oberflächen ab und führen zu Qualitätseinbussen des Produktes, da sie dort zu Stippen oder «Fischaugen» führen. Schliesslich behindern solche Krusten auch die Abfuhr der Polymerisationswärme über die Reaktorwandungen, wodurch längere Reaktionszeiten, unkontrollierter Reaktionsverlauf und damit eine Gefährdung der Betriebssicherheit in Kauf genommen werden müssen.

Die Entfernung solcher Wandbeläge und Krusten ist daher unumgänglich. Meist geschieht dies auf mechanischem Wege, z.B. durch Ausspritzen des entleerten Reaktionsbehälters (Autoklaven) mit Hochdruckwasser (z.B. von mehr als 100 bar). Hierbei lösen sich im allgemeinen jedoch die meistenteils fest haftenden Wandbeläge nicht zur Gänze ab. Die zurückbleibenden Teile verursachen vielmehr bei darauf folgenden Polymerisationen die verstärkte Bildung solcher Krusten. Daher muss der Reaktor schon nach wenigen Ansätzen geöffnet und unter aufwendigen Sicherheitsvorkehrungen von Hand mechanisch gereinigt werden. Abgesehen von den dadurch verlängerten Stillstandszeiten und der Gefährdung der Umwelt, insbesondere des Bedienungspersonals, z.B. durch VC-Reste, lassen sich bei solchen Reinigungen mit dem Spachtel Verletzungen der Behälterwandungen und der Oberflächen der Einbauten nicht vermeiden. Solche Rauhigkeiten bilden ebenfalls wieder den Ausgangspunkt verstärkter Krustenbildung.

Seit langem werden daher Möglichkeiten gesucht, diese Probleme durch Herabsetzung oder Verhinderung der Bildung von Polymerkrusten während der Polymerisation zu lösen.

Beispielsweise ist vorgeschlagen worden, den Autoklavendom während der Polymerisation mit Wasser zu besprühen oder geeignete wasserlösliche Substanzen wie Nitrite der Polymerisationsflotte zuzusetzen. Diese Verfahren befriedigten jedoch noch nicht völlig, auch brachten sie z.B. Abwasserprobleme mit sich.

Der andere mittlerweile meist begangene Weg ist die Beschichtung der Innenwandungen der Reaktionsvorrichtungen mit weitgehend unlöslichen Überzügen aus organischen Verbindungen, die polare Gruppen enthalten. Beispielhaft seien hier organische Farbstoffe wie Nigrosin-Schwarz, Sudan Schwarz B u.ä. (vgl. z.B. GB-A-1 562 290), Polykondensate wie Polyimine, Polyamine, Polyphenole, die zum Teil mit einem Aldehyd vernetzt wurden (vgl. z.B. WO-A-82/02555, US-A-3 055 876), genannt.

Die bekannten Beschichtungen genügten jedoch noch nicht allen Anforderungen, sei es durch noch zu starkes Auf- und Ablösen und dadurch bedingte Verfärbung des Produktes, sei es wegen noch unbefriedigender Wirkung. Auch sind sie noch nicht universell einsetzbar oder zeigen auch noch eine unerwünschte retardierende Wirkung auf die Polymerisation, auch Veränderungen der Polymeren, z.B. Vergröberungen des Korns, Verringerung der thermischen Belastbarkeit, traten auf.

Zur Umgehung dieser Schwierigkeiten wurden daher in den US-A-4 143 097 und US-A-4 256 854 bzw. DE-A-2 703 280 und EP-A-30 35 auch schon Beschichtungen mittels bestimmter Derivate des Benzthiazol-2-on-hydrazons vorgeschlagen, die gegebenenfalls mittels bestimmter Trägermaterialien auf den Wandungen fixiert werden können. Unter anderem wird dabei auch vorgeschlagen, zur Fixierung der Wirksubstanzen vernetzende Materialien wie Schellack oder Alkydharze, solche auf Isocyanat- oder Phenol-Aldehydbasis, sowie solche auf Epoxid- oder Anhydridbasis einzusetzen. Hierbei ist jedoch wesentlich, dass die Wirksubstanz vorzugsweise nicht chemisch gebunden wird, insbesondere jedoch nicht über die dort wesentliche Hydrazongruppe, da sonst die gewünschte belagsverhindernde Wirkung ausbleibt. Deshalb wird dort auch empfohlen, dem Epoxid- oder Anhydridsystem einen Härter zuzusetzen, der vernetzungsaktiver ist als die Wirksubstanz.

Abgesehen von der Tatsache, dass der aktive belagsverhindernde Teil der Wirksubstanz nur physikalisch im Belag suspendiert ist und daher insbesondere beim Einsatz von Emulgatoren relativ leicht ausgewaschen wird, ist bei der Herstellung der Beschichtungen das Mischungsverhältnis Epoxid-Vorpolymerisat/Härter/Wirksubstanz recht genau einzuhalten, auch ist wegen der recht kurzen Topfzeit das reaktive Beschichtungsmittel nur begrenzt lagerfähig.

Aufgabe der Erfindung war daher, ein Verfahren zu finden, das sich durch Einfachheit und Sicherheit auszeichnet, das eine gute bis sehr gute Wirksamkeit gegen die Bildung von Polymerbelägen zeigt, das selbst im unvernetzten Zustand eine gute Beständigkeit gegen Abwaschen und im vernetzten Zustand sogar bei stark emulgatorhaltigen Polymerisationsgemischen eine gegenüber dem Stand der Technik verbesserte Beständigkeit

besitzt, sowie die dargelegten Nachteile des Standes der Technik vermeidet.

Gelöst wird die Aufgabe in überraschender Art und Weise durch ein Verfahren zur Herstellung von Polymerisaten ethylenisch ungesättigter Verbindungen durch Polymerisation dieser Monomeren vorzugsweise in wässrigem Medium mittels freie Radikale bildendem Initiatorsystem ggf. in Gegenwart üblicher Schutzkolloide und/oder Emulgatoren und ggf. weiterer üblicher Zusätze in einem Reaktor, in dem die mit Bestandteilen des Reaktionsgemisches in Berührung kommenden Oberflächen mit einer Beschichtung versehen sind, die die Bildung von Polymerbelägen zumindest behindert. Das Verfahren ist dadurch gekennzeichnet, dass die Beschichtung durch Auftragen einer oder mehrerer Verbindungen der Formel

$$R^1\text{–}X\text{–}CH_2\text{–}CH(OH)\text{–}Y \qquad I$$

hergestellt worden ist, die gegebenenfalls noch einer Vernetzungsreaktion unterworfen wurde(n), wobei

X = O, S, $NR^4$, vorzugsweise O oder NH,

Y = $-CH_2-O-R^6$, 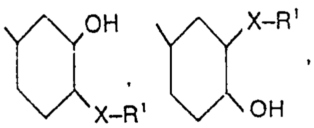 ,

vorzugsweise $-CH_2-OR^6$

$R^1$ = $R^2$–, $R^2$–CO–, $R^2$–C(=$NR^4$)–, $R^2$–$SO_2$–

$R^2$ = durch mindestens einen $R^3$-Rest substituierten Phenyl oder Naphthyl-Rest oder gegebenenfalls durch einen oder mehrere $R^3$-Reste substituierten Rest eines Heterocyclus, der sich durch Substitution eines oder mehrerer Ring-C-Atome durch Stickstoff-, Schwefel- und/oder Sauerstoffatome von Benzol, Cyclopentadien, Inden, Naphthalin oder deren teilweise oder vollständig hydrierten Analoga ableitet, oder geradkettiges oder verzweigtes $C_1$- bis $C_8$-, vorzugsweise $C_1$- bis $C_4$-, Alkyl, das noch mindestens einen Substituenten $R^3$ trägt, oder

$-NR_2^4$ oder

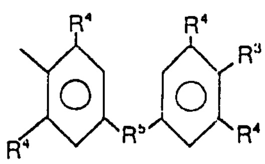

$R^3$ = –OH, –SH, $-NR_2^4$, –COOH, $-SO_3H$

$R^4$ = jeweils unabhängig voneinander H, $C_1$- bis $C_4$-Alkyl,

$R^5$ = 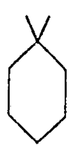 , $-CH_2-$, $CH_3-\overset{|}{\underset{|}{C}}-CH_2-CH_2-OH$,

$-C(CH_3)_2-$, $-C(CH_3)_2-C_6H_4-C(CH_3)_2-$

$R^6$ = $R^7-O-CH_2-CH(OH)-CH_2-X-R^1$,

$-R^7-OCH_2-\overline{CH-OCH_2}$, vorzugsweise $-R^7-O-CH_2-CH(OH)-CH_2-X-R^1$

und

$R^7$ = Phenylen- oder Naphthylen-Rest, die einen oder mehrere $R^3$- und/oder $R^4$-Reste tragen, $C_1$- bis $C_8$-, vorzugsweise $C_1$- bis $C_4$-, Alkylen, das einen oder mehrere $C_1$- bis $C_4$-Alkylreste tragen kann, oder

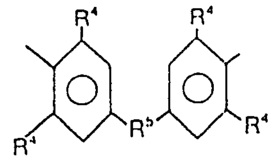

bedeuten.

Die vorstehenden Definitionen gelten auch für im folgenden angegebene Formeln.

Die Beschichtung der Oberflächen geschieht vorzugsweise in der Form, dass die Verbindung der Formel I oder das Gemisch aus solchen Verbindungen als vorzugsweise 1 bis 10 gewichtsprozentige Lösung oder Dispersion in polaren Lösungsmitteln, die vorzugsweise frei von amino-, imino-, amido- oder imidofunktionellen Gruppen sind und bei vorzugsweise höchstens 120, besser bei höchstens 100 °C sieden, vorzugsweise bei Raumtemperatur, z. B. zwischen 10 und 30 °C, aufgebracht und gegebenenfalls anschliessend zur Entfernung des Lösungsmittels für vorzugsweise 30–120 Minuten auf vorzugsweise 40–120, besser 40–100 °C erwärmt wird. Es hat sich auch vielfach als vorteilhaft erwiesen, die Lösung der Verbindung(en) der Formel I auf pH-Werte von 7–12, vorzugsweise 9–12, gegebenenfalls durch Zugabe von (Erd-)Alkalihydroxid, z. B. Natron-, Kalk- und Kalilauge, einzustellen.

Als besonders geeignete Lösungsmittel seien hier Propanon und Butanon-2, Butanol, n- und iso-Propanol und insbesondere Ethanol und Methanol genannt, die gegebenenfalls mit bis zu etwa der gleichen Menge Wasser gemischt werden können.

Gemäss einer bevorzugten Ausführungsform wird ein Gemisch mindestens einer Verbindung obiger Formel I mit mindestens einer Verbindung der Formel

$$\overline{CH_2-O-CH}-CH_2-O-R^7-O-CH_2-\overline{CH-O-CH_2} \qquad II$$

im molaren Verhältnis von 10:1 bis 1:1, vorzugsweise 8:1 bis 2:1, vorzugsweise gemäss den vorstehenden Massnahmen und Bedingungen auf die zu beschichtenden Oberflächen aufgebracht und vorzugsweise bei den oben genannten Temperaturen getrocknet und dabei gleichzeitig vernetzt.

Das erfindungsgemässe Verfahren kann auf eine Vielzahl von Monomeren angewandt werden, die nach dem Suspensions-, Emulsions- oder Mikrosuspensionsverfahren in wässrigem Medium oder in Masse polymerisiert werden. Als Beispiele seien hier die Styrole, Acryl- und Methacrylester, Vinylester, Vinylhalogenide und Vinylidenhalogenide und deren Gemische genannt.

Besonders geeignet und daher bevorzugt ist das erfindungsgemässe Verfahren für die Homo-, Co- und Pfropfcopolymerisation des Vinylchlorids (VC). Weitere Beispiele für geeignete Monomere, bzw., soweit miteinander und/oder mit VC copolymerisierbar. Comonomere sind Vinylester von Carbonsäuren der Formel RCOOH, wobei R Wasserstoff oder gerad- oder verzweigtkettige $C_1$- bis $C_{20}$-Alkylgruppen bedeuten kann, z.B. Vinylformiat, -(n-, sec-)butyrat, -laurat, -stearat, -versatat (= Vinylester der Versatic®-säuren, nach der Koch'schen Synthese hergestellten Carbonsäuren, vgl. Römpps Chemie-Lexikon, 7. Aufl., 1977, S. 3803), vorzugsweise Vinylacetat und -propionat; $C_1$- bis $C_{18}$-Alkylester α,β-ungesättigter Carbonsäuren mit 3 bis 6 C-Atomen im Acylrest, z.B. Methyl-, Ethyl-, (n-, iso-)Propyl-, (n-, sec-, tert-)-Butylcrotonat, -itaconat, sowie vorzugsweise -methacrylat und insbesondere -acrylat; Styrol; Vinyltoluol; Vinylfluorid und -bromid; Vinylidenhalogenide, z.B. -chlorid und -bromid; α-Olefine, z.B. Propylen und vorzugsweise Ethylen; Malein- und Fumarsäure-mono- und/oder -diester mit gesättigten $C_1$- bis $C_{18}$-Alkoholen; Vinylether; (Meth-)Acrylnitril; (Meth-)Acrylamid; Vinylsulfonsäure, bzw. deren Salze; Acrylsäure, Methacrylsäure, Maleinsäure, Fumarsäure, Maleinanhydrid und Gemische solcher Verbindungen, wobei die wasserlöslichen stark polaren Monomeren meist in geringen Mengen zur Stabilisierung der Dispersion eingesetzt werden.

Geeignete Polymerisationsverfahren, die erfindungsgemäss abgewandelt werden können, sind z.B. aus den folgenden Druckschriften bekannt:

EP-A-590, 8775, 14 420, 17 986, 28 812, 32 724, 62 106, 76 511, 78 043,

DE-A-2 206 593, 2 234 038, 2 629 880, 3 215 624, 3 312 255.

Besonders bevorzugt werden erfindungsgemäss VC-Homopolymere und VC-Copolymere mit bis zu 40 Gew.-%, bezogen auf Gesamtgewicht, an genannten Comonomereinheiten hergestellt.

Hinsichtlich des Initiatorsystems, das aus öllöslichen oder wasserlöslichen peroxidischen Verbindungen, gegebenenfalls kombiniert mit Reduktionsmitteln bestehen kann, der Schutzkolloide, Emulgatoren und weiteren üblichen Zusätze wird hier zur Straffung der Beschreibung auf die vorstehend genannten Druckschriften, sowie z.B. auf D'Alelio, Fundamental Principles of Polymerization, New York/London, 1952 und Houben-Weyl, Methoden der organischen Chemie, 4. Auflage, 1961, Band 14/1 verwiesen.

Die Verbindungen der Formel I $R^1$–X–$CH_2$–CH(OH)–Y können aus Diglycidethern der Formel II oder Vinylcyclohexendioxid, vorzugsweise Diglycidethern der Formel II, z.B. durch Umsetzung mit durch Hydroxy-, Thiol-, Amino-, Sulfoxyl und/oder Carboxylgruppen ($R^3$) mindestens zweifach substituierten Benzol- oder Naphthalinderivaten, mit durch mindestens eine dieser genannten Gruppen $R^3$ substituiertem Heterocyclus, der sich vorzugsweise von Benzol durch Substitution eines oder zweier, insbesondere eines Ring-C-Atoms durch vorzugsweise Stickstoff ableitet, mit durch mindestens zwei dieser genannten Gruppen $R^3$ substituiertem geradkettigem oder verzweigtem Alkyl mit 1 bis 8, vorzugsweise 1 bis 4, C-Atomen, mit Guanidin oder mit

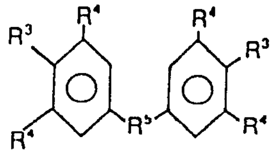

hergestellt werden,

wobei $R^3$ und $R^4$ jeweils unabhängig voneinander die vorstehenden Bedeutungen besitzen können.

Vorzugsweise sind die $R^3$-Aminogruppen höchstens durch einen Alkylrest, besser durch keinen Alkylrest, substituiert.

Als geeignete Verbindungen, die als $R^1$–$R^3$ bezeichnet werden können und aus denen durch Umsetzung mit den Diglycidethern oder mit Vinylcyclohexendioxid die Verbindungen der Formel I hergestellt werden können, seien beispielhaft genannt:

Dihydroxybenzole, z.B. Resorcin, Hydrochinon, Brenzcatechin; Amino-hydroxy-benzole, z.B. 2-, 3- und insbesondere 4-Aminophenol; Thiol-hydroxybenzole, z.B. Monothiobrenzcatechin, Monothioresorcin, Monothiohydrochinon; Hydroxybenzoesäuren, z.B. Salicylsäure, 3- und 4-Hydroxybenzoesäure; Aminobenzoesäuren, z.B. Anthranilsäure, 3- und 4-Aminobenzoesäure; Aminohydroxybenzoesäuren, z.B. 3- und 4-Aminosalicylsäure, 2- und 4-Amino-3-hydroxybenzoesäure, 2- und 3-Amino-4-hydroxybenzoesäure, Dihydroxybenzoesäuren; Pyrogallol; Aminophenylsulfonsäure, Aminonaphthole; Naphthalendiamine; α- und β-Naphthohydrochinon und andere Dihydroxynaphthaline; Aminonaphthoesäuren. Des weiteren Hydroxypyridine; Aminopyridine; Dihydroxypyridine, Hydroxy-aminopyridin; Picolinsäure, Nicotinsäure, Isonicotinsäure, Citrazinsäure, Amino- und Hydroxypyridinsäuren; Aminopyrimidin; Aminodihydroxypyrimidine; Zitronensäure; Ethylendiamin; Guanidin; Diaminobutan; Bisphenol A. Die substituierten Benzole werden als Ausgangssubstanz besonders bevorzugt.

Die Verbindungen $R^1$–$R^3$, die mehr als zwei zur Reaktion mit Epoxidgruppen befähigte Stellen besitzen, werden bevorzugt, wenn die Beschichtung gemäss der oben beschriebenen bevorzugten Ausführungsform vernetzt werden soll. Insbesondere sind hier Verbindungen mit mindestens einer Aminogruppe (gegebenenfalls neben anderen Resten $R^3$) zu nennen. Ihr Einsatz ist daher auch besonders bevorzugt.

Bei der Herstellung der Verbindungen gemäss Formel I werden die Verbindungen $R^1$–$R^3$ mit den Epoxyverbindungen vorzugsweise im Überschuss, z.B. im Molverhältnis von etwa 2:1 bis 3:1 eingesetzt, so dass vorzugsweise alle Epoxygruppen abreagieren, jedoch kann durchaus ein geringer Anteil an noch epoxygruppenhaltigen Verbindungen der Formel I vorhanden sein, insbesondere dann, wenn in der Verbindung der Formel I X = NH oder mindestens ein Teil der Reste $R^3$ $NH_2$ bedeuten.

Die erfindungsgemäss eingesetzten Verbindungen der Formel I und gegebenenfalls der Formel II können, wie bereits dargelegt, vorzugsweise als Lösung auf die mit den Monomeren in Berührung kommenden vorher gründlich gereinigten Oberflächen aufgebracht werden. Gegebenenfalls kann diese Behandlung nach entsprechender Zwischentrocknung und eventueller Erwärmung mehrfach wiederholt werden. In der Regel reicht jedoch eine einmalige Beschichtung aus, da sich die Verbindungen durch ein gutes Aufziehvermögen auszeichnen. Diese Behandlung erfolgt nach den üblichen Verfahren, z.B. durch Spülen, Einstreichen, Aufsprühen oder kurzzeitiges Fluten des Behälters oder dergleichen, vorzugsweise durch Aufsprühen oder Einstreichen, in der Regel vor jedem Polymerisationsansatz. Vorzugsweise werden dann die behandelten Flächen vor der Polymerisation noch kurz mit Wasser oder Polymerisationsflotte nachgespült, wobei die abgelaufene Flüssigkeit entfernt wird. Sofern die Beschichtung gemäss der bevorzugten Ausführungsform vernetzt wird, erübrigt sich das Nachbehandeln des Behälters mit neuer Beschichtungslösung/-dispersion nach jedem Polymerisationsansatz. Vielmehr genügt es dann im allgemeinen, den Behälter nur kurz durch Nachspülen mit Wasser von losen Polymerrückständen zu befreien. Es hat sich dann nur als vorteilhaft erwiesen, den Behälter von Zeit zu Zeit auf Verletzungen der Beschichtung zu überprüfen und gegebenenfalls z.B. nach 20 bis 70 Reaktionszyklen vorsichtshalber erneut zu beschichten. Zur Vorbereitung der Beschichtung hat es sich als vorteilhaft erwiesen, den Behälter von Polymerresten und anderen Verunreinigungen zu befreien. Zum Beispiel hierfür seien genannt: mechanische Reinigung, Behandlung mit Lösungsmitteln, Säuren, Oxydationsmitteln, Hochdruckwasser und dergleichen.

Da die Lösung bzw. Dispersion der Verbindungen der Formel I durch Luftsauerstoff nicht in ihrer Wirksamkeit beeinträchtigt werden, braucht nicht besonders auf Luftabschluss geachtet zu werden, sofern dies nicht aus anderen Gründen bevorzugt ist, z.B. um das Spülen mit Inertgas vor Einleiten der Polymerisation unnötig zu machen.

An die Oberflächenbeschaffenheit der Polymerisationsvorrichtung sind keine besonderen Bedingungen zu stellen, obgleich eine unbeschädigte, glatte Oberfläche üblicherweise vorgezogen wird. Sie kann aus verschiedenen Materialien bestehen, z.B. Glas, Emaille bzw. Schmelzglasur oder Metall, insbesondere Stahl. Es versteht sich von selbst, dass sich der Begriff Oberfläche nicht auf die Behälterwand beschränkt, sondern sich ebenso auf andere mit Bestandteilen des Reaktionsgemisches in Berührung kommende Oberflächen, z.B. von Rohrleitungen, Druckausgleichsgefässen, Ventilen, Stromstörern, Messfühlern, Aussen-(Rückfluss)kühlern, Innenkühlern, Behälterstutzen und weiteren Einbauten bezieht.

Die Polymerisation selbst kann, wie bereits dargelegt, nach den üblichen Verfahren der Masse, Suspensions-, Emulsions- oder Mikrosuspensionsverfahren diskontinuierlich aber gegebenenfalls auch kontinuierlich mit oder ohne Verwendung von Saat-Vorpolymerisaten mit den üblichen Initiatorsystemen, Schutzkolloiden, Emulgatoren und weiteren Polymerisationshilfsstoffen gegebenenfalls unter Rückflusskühlung in teilweise oder ganz gefüllten Reaktionsbehältern (Autoklaven) drucklos, unterhalb, bei oder oberhalb des autogenen Drucks der Monomeren, z.B. bei Mitverwendung von Ethylen bis z.B. 100 bar oder darüber, unter Vorlage aller oder einzelner Bestandteile des Reaktionsgemisches oder unter teilweiser Vorlage und Nachdosierung der oder einzelner Bestandteile des Reaktionsgemisches oder nach dem Dosierverfahren ohne Vorlage durchgeführt werden.

Obgleich es normalerweise überflüssig ist, ist es natürlich nicht ausgeschlossen, dem Polymerisationsgemisch eine geringe Menge von Wandanlageinhibitor zuzusetzen, z.B. Zitronen- oder Weinsäure. Auch ist es natürlich möglich, Farbstoffe, die für diesen Zweck schon eingesetzt werden, zuzugeben, sofern man die Verfärbung des Produktes toleriert. Vorzugsweise erfolgen keine solchen Zusätze.

Die Polymerisate können in der üblichen Art und Weise aufgearbeitet werden, z.B. können die entstehenden Suspensionen, Dispersionen oder Latices bzw. Polymeren in üblicher Weise entgast, filtriert, koaguliert, getrocknet oder stabilisiert werden.

Es wurde festgestellt, dass die erfindungsgemäss eingesetzte Beschichtung insbesondere nach Vernetzung praktisch keine Auf- und Ablösetendenzen mehr besitzt, so dass Rückstände davon praktisch weder im Produkt noch im Abwasser mehr nachweisbar sind.

Die folgenden Beispiele sollen die vorliegende Erfindung weiter erläutern, sie stellen bevorzugte Ausführungsformen der Erfindung dar, ohne diese streng zu beschränken. Die Ausbeuten (% der Theorie) beziehen sich jeweils auf den eingesetzten Diglycidether.

Beispiel 1

In einem Dreihalskolben, ausgerüstet mit Rührer, Rückflusskühler und Tropftrichter, wurden 30,4 g (0,22 mol) 4-Hydroxybenzoesäure und 1,0 g Triethylamin in 350 ml Dioxan vorgelegt und zum Sieden erhitzt. Dann wurden unter Rühren durch langsames Zutropfen 34,0 g (0,1 mol) Bisphenol-A-diglycidether (BD), gelöst in 200 ml Dioxan, zugegeben. Nach Ende der Zugabe wurde das Reaktionsgemisch noch bis zum Ende der Reaktion am Sieden gehalten, dann durch Abdestillation vom Lösungsmittel befreit. Das Reaktionsprodukt wurde im Hochvakuum getrocknet.

Ausbeute: 95,6%.

Beispiel 2

In der gleichen Vorrichtung wie in Beispiel 1 wurden 30,2 g (0,22 mol) 4-Aminobenzoesäure in 400 ml Ethanol vorgelegt. Unter Rühren wurde eine Lösung von 34,0 g BD (0,1 mol) in 400 ml Ethanol zugetropft. Nach Ende der Zugabe wurde noch eine Stunde zum Sieden erhitzt, darauf das Lösungsmittel weitgehend abdestilliert, der Rückstand mit Wasser versetzt und angesäuert. Anschliessend wurde mit Diethylether extrahiert, der Ether abdestilliert und das Produkt im Hochvakuum getrocknet.

Ausbeute: 95%.

Beispiel 3

Analog Beispiel 2 wurden 22,0 g Resorcin (0,22 mol) in Form des Mononatriumsalzes mit 34,0 g (0,1 mol) BD in insgesamt 600 ml Ethanol umgesetzt. Nach dreistündigem Kochen am Rückfluss wurde das Produkt, wie in Beispiel 2 beschrieben, aufgearbeitet.

Ausbeute: 57%.

Beispiel 4

Analog Beispiel 2 wurden 48,0 g (0,44 mol) 4-Aminophenol in 1000 ml Ethanol und 68,0 g BD (0,2 mol) in 500 ml Ethanol umgesetzt. Nach fünfstündigem Rückflusskochen wurde das Lösungsmittel abdestilliert und das Produkt im Hochvakuum getrocknet.

Ausbeute: 97%.

Beispiel 5

Gemäss Beispiel 4 wurden 10,4 g 4-Aminopyridin (0,11 mol) und 17,0 g BD (0,05 mol) in insgesamt 350 ml Ethanol umgesetzt.

Ausbeute: 78%.

Beispiel 6

Gemäss Beispiel 4 wurden 33,9 g (0,22 mol) 4-Aminosalicylsäure und 34,0 g BD (0,1 mol) in insgesamt 750 ml Ethanol umgesetzt.

Ausbeute: 98%.

Beispiel 7

In einem Reaktionsgefäss gemäss Beispiel 1 wurden 20,8 g (0,11 mol) 2-Aminophenol-4-sulfonsäure in 200 ml Ethanol vorgelegt und mit 2 n wässriger NaOH– auf einen pH-Wert von 8,5 eingestellt.

Nach Erhitzen zum Sieden wurde langsam eine Lösung von 17,0 g BD (0,05 mol) in 150 ml Ethanol zugetropft. Nach Ende der Zugabe wurde das Reaktionsgemisch noch 8 h am Rückfluss gekocht und dann durch Abdestillation des Lösungsmittels auf etwa 20% eingeengt. Der Rückstand wurde mit Wasser verdünnt und angesäuert. Das abgeschiedene Produkt wurde abfiltriert und im Hochvakuum getrocknet.

Ausbeute: 62,5%.

Beispiel 8

In der gleichen Vorrichtung wie in Beispiel 1 wurden 12,1 g (0,11 mol) 2-Amino-3-hydroxypyridin in 250 ml Ethanol vorgelegt. Unter Rühren wurde eine Lösung von 17,0 g BD (0,05 mol) in 150 ml Ethanol zugetropft. Nach Ende der Zugabe wurde das Gemisch noch 5 h am Rückfluss gekocht und danach vom Lösungsmittel befreit. Schliesslich wurde das Produkt im Hochvakuum getrocknet.

Ausbeute: 95%.

Beispiel 9

Analog Beispiel 8 wurden 36,0 g 4-Aminophenol (0,33 mol) mit 30,3 g Butandioldiglycidether (0,15 mol) in insgesamt 900 ml Ethanol umgesetzt.

Ausbeute: 92%.

Beispiel 10

Analog Beispiel 8 wurden 24,0 g 4-Aminophenol (0,22 mol), das in 500 ml Toluol und 300 ml Ethanol vorgelegt wurde, und 22,2 g Hydrochinondiglycidether (0,1 mol), das als Lösung in 250 ml Toluol zugetropft wurde, zur Reaktion gebracht.

Ausbeute: 95%.

Beispiel 11

In einem Dreihalskolben ausgerüstet gemäss Beispiel 1 wurden 15,03 g Ethylendiamin (0,25 mol) in 250 ml Ethanol gelöst vorgelegt. Dazu wurde bei 35 °C langsam eine Lösung von 34,0 g BD (0,1 mol) in 300 ml Ethanol getropft. Nach Ende der Zugabe wurden Ethanol und überschüssiges Ethylendiamin abdestilliert und das Reaktionsprodukt im Hochvakuum getrocknet.

Ausbeute: 94%.

Beispiel 12

Beispiel 1 wurde wiederholt mit den Abänderungen, dass 42,2 g (0,22 mol) Zitronensäure und 1,0 g Triethylamin in 300 ml Dioxan vorgelegt und 34,0 g BD (0,1 mol) in 250 ml Dioxan zugetropft wurden.

Ausbeute: 57%.

Die folgenden Beispiele zeigen die überraschenden Vorteile der vorliegenden Erfindung.

Die Beispiele 13 bis 24, 30 bis 32 und Vergleichsversuche A, B, D und E wurden in einem 1 l-Stahlautoklaven nach folgendem Schema durchgeführt:

a) Füllen des Autoklaven mit Tetrahydrofuran (THF), Rühren des THF bei 60 °C über 16 h, Ablassen. Damit wurde die absolute Freiheit des Gefässes von Polymerablagerungen sichergestellt.
b) Spülen mit Aceton
c) Reinigung des Autoklaven mit einem abrasiven Mittel um sicherzustellen, dass die Wandung frei war von allen Resten früherer Beschichtungen
d) Spülen mit entionisiertem Wasser
e) Trocknung des Autoklaven bei 60 °C
f) Beschichtung des Autoklaven und der Einbauten wie in den einzelnen Beispielen angegeben bei Raumtemperatur.
g) Beschicken des Autoklaven mit einem Reaktionsgemisch aus

| | |
|---|---|
| 200 | Gewichtsteilen entionisiertem Wasser |
| 100 | Gewichtsteilen Vinylchlorid |
| 0,16 | Gewichtsteilen Polyvinylalkohol mit einer Viskosität von 5 mPas (nach Höppler in 4-gew.-%iger wässriger Lösung bei 20 °C gemessen) und einer Verseifungszahl von 270 (mg KOH/g Polyvinylalkohol) |
| 0,3 | Gewichtsteilen Dilauroylperoxid und |
| 0,1 | Gewichtsteilen Dicetylperoxydicarbonat. |

h) Polymerisation bei 59 °C unter Rühren mit 400 $Umin^{-1}$ bis ca. 1,5 bar Druckabfall. Nach Ablassen des Produktes wurde der Autoklav lediglich mit drucklosem Wasser ausgespült. Auf diese Weise wurden jeweils vier Polymerisationscyclen ohne dazwischengeschaltete

mechanische oder chemische Reinigung durchgeführt.

i) Nach Ablassen des vierten Ansatzes und dem Ansprühen mit drucklosem Wasser wurde der Autoklav wieder wie unter a) beschrieben mit THF behandelt. Das abgelassene THF wurde in einem gewogenen Kolben überführt und abdestilliert. Die Wandanlage ergab sich als Rückstand im Kolben und wurde durch Auswiegen ermittelt.

Zur Prüfung der Festigkeit der Haftung von Wandbelägen wurde jeweils, soweit angegeben, auch nach der 4. Charge mechanisch etwas Belag losgekratzt.

Vergleichsversuch A

Der Autoklav wurde nicht beschichtet. Nach der Polymerisation zeigte sich schon nach der 1. Charge starke Wandanlage. Nach der 4. Charge waren die Krusten so festgebacken, dass sie mechanisch mit dem Spachtel nur schwer abzulösen waren. Insgesamt wurden 10,20 Gewichtsteile herausgelöst.

Beispiel 13

Der Reaktor wurde mit einer 2-gew.-%igen Lösung des Produktes aus Beispiel 2 in Ethanol, die mit 2 n-Natronlauge auf pH 9,5 eingestellt wurde, beschichtet. Die Beschichtung wurde nach jedem Ansatz wiederholt. Nach der 4. Charge war der Reaktor lediglich am Übergangsbereich zwischen Flüssigphase und Gasraum, d.h. in dem Bereich, der durch die Volumenkontraktion frei wird bzw. nur zeitweise von der Flüssigphase bedeckt wird, leicht angelegt. Der minimale Belag liess sich mit dem Fingernagel sehr leicht entfernen.

Wandbelag insgesamt 0,70 Gewichtsteile.

Beispiel 14

Beispiel 13 wurde wiederholt mit der Abwandlung, dass die Beschichtungslösung auf pH 11,0 eingestellt wurde.

Die Gesamtwandanlage betrug nur noch 0,13 Gewichtsteile und war somit kaum mehr wahrzunehmen.

Beispiel 15

Der Reaktor wurde vor jedem Ansatz mit einer 2-gew.-%igen Lösung des Produktes aus Beispiel 3 in Methanol beschichtet, die mit 2 n-Natronlauge auf pH 11,5 eingestellt war.

Die Gesamtwandanlage betrug nur noch 0,11 Gewichtsteile und war somit kaum mehr wahrnehmbar.

Beispiel 16

Der Reaktor wurde vor jedem Ansatz mit einer 2-gew.-%igen methanolischen Lösung des Produktes aus Beispiel 4 beschichtet, die mit 2 n-Natronlauge auf pH 12,0 eingestellt war.

Lediglich an der Phasengrenze des Gasraums zur Flüssigphase schied sich mit dem Finger leicht entfernbares Polymerisat von insgesamt 0,10 Gewichtsteilen ab.

Beispiel 17

Der Autoklav wurde vor jedem Ansatz mit einer 2-gew.-%igen methanolischen Lösung des Produktes aus Beispiel 11 beschichtet, die mit konzentrierter Natronlauge auf pH 11,5 eingestellt war.

Insgesamt wurden 0,30 Gewichtsteile lose anhaftendes Polymerisat von der Phasengrenze gelöst.

Beispiel 18

Der Autoklav wurde vor jedem Ansatz mit einer 4,5-gew.-%igen Lösung des Produkts aus Beispiel 12 in Methanol (pH = 4,0) beschichtet.

Insgesamt wurden wieder nur 0,10 Gewichtsteile abgelöst.

Beispiel 19

Der Autoklav wurde vor jedem Ansatz mit einer 5-gew.-%igen methanolischen Lösung des Produkts aus Beispiel 1 beschichtet, die mit 1 n-Natronlauge auf einen pH-Wert von 12 eingestellt war.

Insgesamt wurden 0,8 Gewichtsteile Wandbelag herausgelöst, der jedoch sehr leicht entfernbar war.

Beispiel 21

Beispiel 16 wurde mit dem Produkt aus Beispiel 9 wiederholt. Das Gewicht des losen Belags betrug insgesamt 0,75 Gewichtsteile.

Beispiel 22

Beispiel 16 wurde mit dem Produkt aus Beispiel 10 wiederholt. Der lose Belag wog insgesamt 0,86 Gewichtsteile.

Beispiel 23

Vom Produkt des Beispiels 4 und Bisphenol-A-diglycidether (BD) wurde eine 5-gew.-%ige Lösung (molares Verhältnis der Komponente aus Beispiel 4:BD = 8:2) hergestellt und mit 2 n-Natronlauge auf pH 12 eingestellt.

Mit dieser Lösung wurde der Reaktor beschichtet und dann eine Stunde auf 60 °C aufgeheizt.

Nach der 4. Charge, die Beschichtung wurde zwischenzeitlich nicht erneuert, enthielt der Reaktor nur an der Phasengrenze insgesamt 0,45 Gewichtsteile lose anhaftenden Belag.

Beispiel 24

Aus den Produkten der Beispiele 3 und 11 sowie Bisphenol-A-diglycidether wurde eine 5-gew.-%ige methanolische Lösung im molaren Verhältnis 8:8:2 der drei Komponenten hergestellt und mit 2 n-Natronlauge auf pH 11 eingestellt.

Nach der Beschichtung mit dieser Lösung wurde der Reaktor 90 Minuten auf 90 °C aufgeheizt.

Nach vier Ansätzen ohne zwischenzeitliche Erneuerung der Beschichtung enthielt der Reaktor nur an der Phasengrenze insgesamt 0,59 Gewichtsteile lose anhaftenden Belag.

Vergleichsversuch B

Gemäss der allgemeinen Versuchsbeschreibung vor Beispiel 13 wurde in dem nicht beschichteten Autoklaven ein Copolymer aus Vinylchlorid und Vinylacetat gemäss folgender Rezeptur hergestellt.

200 Gewichtsteile entionisiertes Wasser
0,6 Gewichtsteile Polyvinylalkohol einer Höppler-Viskosität von 25 mPas (4-gew.-%ige wässrige Lösung bei 20 °C) und mit Verseifungszahl 190
0,6 Gewichtsteile Dilauroylperoxid
0,1 Gewichtsteile Dicetylperoxydicarbonat
1,0 Gewichtsteile Trichlorethylen (Regler)
85 Gewichtsteile Vinylchlorid
15 Gewichtsteile Vinylacetat

Bereits nach einem Ansatz war der Autoklav derart verkrustet, dass keine zweite Charge polymerisiert werden konnte. Die sehr fest haftende Wandanlage wurde mit THF herausgelöst. Ihr Gewicht betrug schon nach diesem einen Ansatz 14,3 Gewichtsteile.

Beispiel 25

Vom Produkt des Beispiels 4 und Bisphenol-A-diglycidether wurde im Molverhältnis von 7:3 eine 6-gew.-%ige methanolische Lösung hergestellt und mit Natronlauge auf pH 10,5 eingestellt.

Der Autoklav wurde mit dieser Lösung beschichtet und dann für 1 h auf 90 °C aufgeheizt.

Gemäss der allgemeinen Versuchsbeschreibung vor Beispiel 13 wurde mit der Rezeptur des Vergleichsversuchs B ein Copolymer aus Vinylchlorid und Vinylacetat hergestellt.

Es wurden ohne zwischenzeitliche neue Beschichtung vier Ansätze polymerisiert. Der nicht festhaftende Belag wog insgesamt 6,90 Gewichtsteile.

Beispiel 26

Vom Produkt des Beispiels 4 und Bisphenol-A-Diglycidether wurde im Molverhältnis 8:2 eine 5-gew.-%ige ethanolische Lösung hergestellt und mit Natronlauge auf pH 12 eingestellt.

Die gründlich gereinigten und von Rückständen völlig freien Innenflächen und Einbauten eines 25 $m^3$-Stahlautoklaven wurden mit dieser Lösung beschichtet und für 90 min. auf 95 °C aufgeheizt.

Dann wurde der Reaktor in an sich üblicher Weise mit

167 Gewichtsteilen entionisiertem Wasser,
100 Gewichtsteilen Vinylchlorid,
0,15 Gewichtsteilen des in den Beispielen 13 bis 24 verwendeten Polyvinylalkohols und
0,07 Gewichtsteilen Dimyristylperoxydicarbonat

beschickt, und der Inhalt unter Rühren auf 56 °C aufgeheizt und polymerisiert.

Nach Druckabfall um 1 bar wurde das Produkt abgelassen und aufgearbeitet. Der Autoklav wurde mit reinem Wasser ohne Öffnen nachgespült und sofort wieder wie oben beschickt.

Nach 62 solchen Reaktionscyclen ohne zwischenzeitliche Öffnung oder zusätzliche Reinigung des Autoklaven wurde dieser geöffnet. Lediglich im Übergangsbereich (an der Phasengrenze) und an einigen Stellen des Autoklavendoms wurde eine geringe nicht sehr festhaftende Wandanlage festgestellt, die jedoch mit Hochdruckwasser (ca. 200 bar) leicht und rückstandsfrei entfernt werden konnte.

Vergleichsversuch C

Ein von Polymerisat vollkommen gereinigter 16 l-Rührreaktor mit Ankerrührer und Stromstörer wurde zur Herstellung von Polyvinylacetat unter Verwendung folgender Rezeptur eingesetzt:

100 Gewichtsteile Vinylacetat
6 Gewichtsteile Polyvinylalkohol einer Höppler-Viskosität von 25 mPas (4 gew.-%ige wässrige Lösung bei 20 °C) und mit Verseifungszahl 140
0,07 Gewichtsteile Wasserstoffperoxid (eingesetzt als 20%ige wässrige Lösung)
70 Gewichtsteile entionisiertes Wasser.

Nach Vorlage des Wassers, des Polyvinylalkohols, des $H_2O_2$ und von 30 Teilen Vinylacetat wurde der Reaktor mit Inhalt auf 75 °C unter Rühren aufgeheizt und bei dieser Temperatur gehalten, wobei über 8 h gleichmässig das restliche Monomere dosiert wurde.

Nach Dosierende wurde die Temperatur auf 90 °C gesteigert und der Ansatz bei dieser Temperatur über 2 h auspolymerisiert.

Das Restmonomere wurde dann abdestilliert, der Reaktor auf 20 °C abgekühlt und entleert.

Nach Ausspülen des Reaktors blieb eine festhaftende, mechanisch nur schwer zu entfernende Verkrustung an Wand, Rührer und Einbauten zurück.

Eine weitere Polymerisation ohne gründliche Zwischenreinigung war nicht durchzuführen.

Wandanlage: 5 Gewichtsteile.

Beispiel 27

Vom Produkt des Beispiels 4 und Bisphenol-A-Diglycidether wurde im Molverhältnis 6:4 eine 5 gew.-%ige ethanolische Lösung hergestellt und mit Natronlauge auf pH 12 eingestellt.

Die gründlich gereinigten und vom Polymerisat völlig freien Innenflächen, Rührer und Einbauten des Reaktors aus Vergleichsversuch C wurden mit der Lösung beschichtet und für 120 min. auf 90 °C aufgeheizt.

Dann wurden, wie in Vergleichsversuch C beschrieben, zehn Polymerisationen durchgeführt, wobei der Reaktor zwischenzeitlich nur mit Wasser (25 bar) ausgespült wurde.

Nach 10 Reaktionscyclen war die Reaktorwand völlig frei von Verkrustungen. Lediglich am Rührer und an den Einbauten wurde eine mechanisch leicht entfernbare Wandanlage festgestellt.

Wandanlage (nach 10 Cyclen): 2 Gewichtsteile

Vergleichsversuch D

Gemäss der allgemeinen Versuchsbeschreibung vor Vergleichsversuch A wurde in dem nicht beschichteten Autoklaven Polystyrol gemäss folgender Rezeptur hergestellt:

400 Gewichtsteile entionisiertes Wasser
0,45 Gewichtsteile des in Vergleichsversuch B verwendeten Polyvinylalkohols
0,15 Gewichtsteile Methylcellulose MC 25 S

2,0 Gewichtsteile Dicetylperoxydicarbonat
1,0 Gewichtsteile Dilauroylperoxid
200 Gewichtsteile Styrol
Polymerisations-Temperatur: 60 °C
Rührerdrehzahl: 300 $min^{-1}$
Polymerisationszeit: 6 h

Nach der vierten Charge zeigte sich im gesamten Füllraum fest haftende Wandanlage, die mit THF herausgelöst werden musste. Ihr Gewicht betrug 4,27 Gewichtsteile.

Beispiel 28

Vom Produkt des Beispiels 4 und BD wurde im Molverhältnis 6:4 eine 5 gew.-%ige ethanolische Lösung hergestellt und mit Natronlauge auf pH 12 eingestellt.

Der Autoklav wurde mit dieser Lösung beschichtet und dann für 2 h auf 90 °C aufgeheizt.

Mit der Rezeptur des Vergleichsversuchs D wurden ohne zwischenzeitliche neue Beschichtung vier Ansätze polymerisiert. Der resultierende deutlich leichter entfernbare Wandbelag wog insgesamt 0,18 Gewichtsteile.

Vergleichsversuch E

Vergleichsversuch D wurde mit der Abänderung wiederholt, dass statt des Styrols ein Gemisch aus je 100 Gewichtsteilen Methylmethacrylat und Styrol eingesetzt wurde.

Die sehr festhaftende Wandanlage nach 4 Ansätzen betrug 1,35 Gewichtsteile.

Beispiel 29

Beispiel 28 wurde mit der Abänderung wiederholt, dass statt des Styrols ein Gemisch von je 100 Gewichtsteilen Styrol und Methylmethacrylat eingesetzt wurde.

Nach 4 Ansätzen wurde eine geringe deutlich leichter entfernbare Wandanlage von 0,08 Gewichtsteilen festgestellt.

Gemäss der allgemeinen Versuchsbeschreibung nach Beispiel 12 wurden die folgenden drei Beispiele durchgeführt:

Beispiel 30

Der Autoklav wurde vor jedem Ansatz mit einer 5 gew.-%igen Lösung des Produkts aus Beispiel 7 in einem 80:20 Gemisch aus Ethanol und Wasser beschichtet, die mit Natronlauge auf pH 12 eingestellt war.

Insgesamt wurden 0,09 Gewichtsteile Wandbelag abgelöst.

Beispiel 31

Aus den Produkten der Beispiele 4 und 7 (Gewichtsverhältnis 1:1) und BD wurde eine 5 gew.-%ige Lösung (Ethanol mit 20% Wasser) hergestellt (molares Verhältnis der Komponente aus Beispiel 4 und 7: BD 5:4) und mit 2n NaOH auf pH 9,5 eingestellt.

Mit dieser Lösung wurde der Reaktor beschichtet und 60 min auf 90 °C aufgeheizt.

Nach 5 Ansätzen ohne zwischenzeitliche Erneuerung der Beschichtung wurden 0,3 Gewichtsteile Belag festgestellt.

Beispiel 32

Beispiel 31 wurde mit der Abänderung wiederholt, dass das molare Verhältnis der Komponenten aus den Beispielen 4 und 7: BD auf 1:1 eingestellt und die Lösung mit 2n Natronlauge auf pH 10 eingestellt wurde.

Nach der Beschichtung mit dieser Lösung wurde der Reaktor 90 min auf 85 °C aufgeheizt.

Nach 5 Ansätzen ohne zwischenzeitliche Reinigung resultierten 0,3 Gewichtsteile lose anhaftender Belag.

Beispiel 33

Analog Beispiel 2 wurden 85 g (0,78 mol) 4-Aminophenol und 21 g (0,11 mol) 2-Aminophenol-4-Sulfonsäure, gelöst in 800 ml Ethanol und 50 ml 2n Natronlauge, mit 149,6 g (0,44 mol) BD in 600 ml Ethanol umgesetzt.

Nach achtstündigem Rückflusskochen wurde das Lösungsmittel abdestilliert und das Produkt im Hochvakuum getrocknet.

Ausbeute: 99%.

Beispiel 34

Analog Beispiel 33 wurden 71 g (0,65 mol) 4-Aminophenol und 31 g (0,16 mol) 2-Aminophenol-4-Sulfonsäure, gelöst in 800 ml Ethanol und 75 ml 2n Natronlauge, mit 136,0 g (0,40 mol) BD in 600 ml Ethanol umgesetzt.

Ausbeute: 97,8%.

Beispiel 35

Analog Beispiel 33 wurden 61 g (0,56 mol) 4-Aminophenol und 41 g (0,22 mol) 2-Aminophenol-4-Sulfonsäure, gelöst in 800 ml Ethanol und 100 ml 2n Natronlauge, mit 129,2 g (0,38 mol) BD in 600 ml Ethanol umgesetzt.

Ausbeute: 98%.

Beispiel 36

Analog Beispiel 33 wurden 51 g (0,47 mol) 4-Aminophenol und 51 g (0,27 mol) 2-Aminophenol-4-Sulfonsäure, gelöst in 700 ml Ethanol und 125 ml 2n Natronlauge, mit 122,4 g (0,36 mol) BD in 600 ml Ethanol umgesetzt.

Ausbeute: 95,6%.

Zu allen Beispielen, die Polymerisationen beschreiben, ist nachzutragen, dass die Produkte keinerlei Beeinträchtigungen der Farbe und Qualität aufwiesen.

**Patentansprüche**

1. Verfahren zur Herstellung von Polymerisaten ethylenisch ungesättigter Verbindungen durch Polymerisation dieser Monomeren mittels freie Radikale bildendem Initiatorsystem ggf. in Gegenwart üblicher Schutzkolloide und/oder Emulgatoren und ggf. weiterer üblicher Zusätze in einem Reaktor, in dem die mit Bestandteilen des Reaktionsgemisches in Berührung kommenden Oberflächen mit einer Beschichtung versehen sind, die die Bildung von Polymerbelägen zumindest behindert, dadurch gekennzeichnet, dass die Beschichtung durch Auftragen einer oder mehrerer Verbindungen der Formel

$R^1-X-CH_2-CH(OH)-Y$ I

hergestellt worden ist, die gegebenenfalls noch einer Vernetzungsreaktion unterworfen wurde(n), wobei

X = O, S, $NR^4$,

Y = $-CH_2-O-R^6$, 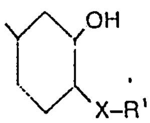 , 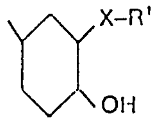

$R^1$ = $R^2-$, $R^2-CO-$, $R^2-C(=NR^4)-$, $R^2-SO_2-$

$R^2$ = durch mindestens einen $R^3$-Rest substituierten Phenyl- oder Naphthyl-Rest oder gegebenenfalls durch einen oder mehrere $R^3$-Reste substituierten Rest eines Heterocyclus, der sich durch Substitution eines oder mehrerer Ring-C-Atome durch Stickstoff-, Schwefel- und/oder Sauerstoffatome von Benzol, Cyclopentadien, Inden, Naphthalin oder deren teilweise oder vollständig hydrierten Analoga ableitet, oder geradkettiges oder verzweigtes $C_1$- bis $C_8$-Alkyl, das noch mindestens einen Substituenten $R^3$ trägt, oder $-NR_2^4$ oder

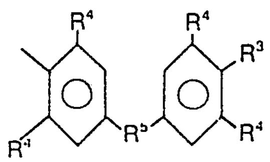

$R^3$ = $-OH$, $-SH$, $-NR_2^4$, $-COOH$, $-SO_3H$

$R^4$ = jeweils unabhängig voneinander H, $C_1$- bis $C_4$-Alkyl

$R^5$ = 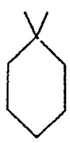 , $-CH_2-$, $CH_3-C-CH_2-CH_2-OH$,

$-C(CH_3)_2-$, $-C(CH_3)_2-C_6H_4-C(CH_3)_2-$

$R^6$ = $R^7-O-CH_2-CH(OH)-CH_2-X-R^1$,

$-R^7-OCH_2-CH-OCH_2$,

und

$R^7$ = Phenylen- oder Naphthylen-Rest, die einen oder mehrere $R^3$- und/oder $R^4$-Reste tragen, $C_1$- bis $C_8$-Alkylen, das einen oder mehrere $C_1$- bis $C_4$-Alkylreste tragen kann, oder

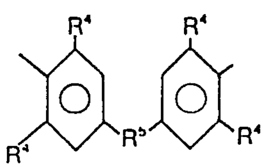

bedeuten.

2. Verfahren nach Anspruch 1, dadurch gekennzeichnet, dass in der Formel I Y = $-CH_2-O-R^6$ bedeutet und die gegebenenfalls vorhandenen Alkyl- bzw. Alkylenreste 1 bis 4 Kohlenstoffatome besitzen.

3. Verfahren nach Anspruch 1 oder 2, dadurch gekennzeichnet, dass in Formel I X = O oder NH bedeutet.

4. Verfahren nach einem der Ansprüche 1 bis 3, dadurch gekennzeichnet, dass die Beschichtung durch Aufbringen eines Gemisches mindestens einer Verbindung der vorstehend definierten Formel I und mindestens einer Verbindung der Formel

$CH_2-O-CH-CH_2-O-R^7-O-CH_2-CH-O-CH_2$ II

in solchen Mengen, dass das molare Verhältnis von Verbindung der Formel I zu Verbindung der Formel II im Bereich von 10:1 bis 1:1 liegt, und anschliessende Umsetzung der Verbindungen miteinander hergestellt worden ist, wobei $R^7$ die oben angegebenen Bedeutungen besitzt.

5. Verwendung einer Beschichtung aus einer oder mehrerer Verbindungen der Formel

$R^1-X-CH_2-CH(OH)-Y$ I

die gegebenenfalls noch einer Vernetzungsreaktion unterworfen wurden, wobei

X = O, S, $NR^4$,

Y = $-CH_2-O-R^6$, 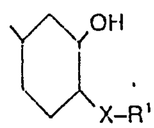 , 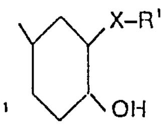

$R^1$ = $R^2-$, $R^2-CO-$, $R^2-C(=NR^4)-$, $R^2-SO_2-$

$R^2$ = durch mindestens einen $R^3$-Rest substituierten Phenyl oder Naphthyl-Rest oder gegebenenfalls durch einen oder mehrere $R^3$-Reste substituierten Rest eines Heterocyclus, der sich durch Substitution eines oder mehrerer Ring-C-Atome durch Stickstoff-, Schwefel- und/oder Sauerstoffatome von Benzol, Cyclopentadien, Inden, Naphthalin oder deren teilweise oder vollständig hydrierten Analoga ableitet, oder geradkettiges oder verzweigtes $C_1$- bis $C_8$-Alkyl, das noch mindestens einen Substituenten $R^3$ trägt, oder $-NR_2^4$ oder

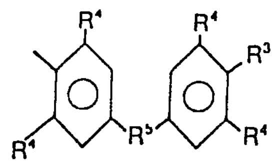 ,

$R^3$ = $-OH$, $-SH$, $-NR_2^4$, $-COOH$, $-SO_3H$

$R^4$ = jeweils unabhängig voneinander H, $C_1$- bis $C_4$-Alkyl

$R^5$ = 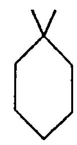 , $-CH_2-$, $CH_3-C-CH_2-CH_2-OH$,

$-C(CH_3)_2-$, $-C(CH_3)_2-C_6H_4-C(CH_3)_2-$

$R^6$ = $R^7-O-CH_2-CH(OH)-CH_2-X-R^1$,

$-R^7-OCH_2-CH-OCH_2$,

und

$R^7$ = Phenylen- oder Naphthylen-Rest, die einen oder mehrere $R^3$- und/oder $R^4$-Reste tragen,

$C_1$- bis $C_8$-Alkylen, das einen oder mehrere $C_1$- bis $C_4$-Alkylreste tragen kann, oder

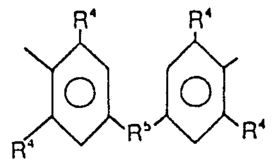

bedeuten,
bei der Herstellung von Polymerisaten ethylenisch ungesättigter Verbindungen durch Polymerisation dieser Monomeren mittels freie Radikale bildendem Initiatorsystem ggf. in Gegenwart üblicher Schutzkolloide und/oder Emulgatoren und ggf. weiterer üblicher Zusätze in einem Reaktor, zur Behinderung der Bildung von Polymerbelägen, durch Beschichten der mit Bestandteilen des Reaktionsgemisches in Berührung kommenden Oberflächen des Reaktors.

## Claims

1. Process for the preparation of polymers of ethylenically unsaturated compounds by polymerization of these monomers by means of an initiator system which forms free radicals, if appropriate in the presence of conventional protective colloids and/or emulsifiers and, if appropriate, further conventional additives in a reactor in which the surfaces, which come into contact with constituents of the reaction mixture, are provided, with a coating which at least inhibits the formation of polymer deposits, characterized in that the coating has been produced by applying one or more compounds of the formula

$$R^1-X-CH_2-CH(OH)-Y \qquad I$$

which compound(s) has or have, if appropriate, also been subjected to a crosslinking reaction, where

$X$ = O, S, $NR^4$,
$Y$ = $-CH_2-O-R^6$,

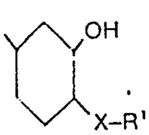
.
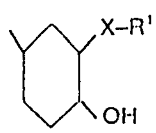

$R^1$ = $R^2-$, $R^2-CO-$, $R^2-C(=NR^4)-$, $R^2-SO_2-$
$R^2$ = a phenyl or naphthyl radical substituted by at least one $R^3$ radical or a radical of a heterocyclic ring which is optionally substituted by one or more $R^3$ radicals and which is derived from benzene, cyclopentadiene, indene, naphthalene or their partially or completely hydrogenated analogues by substitution of one or more ring C atoms by nitrogen, sulphur and/or oxygen atoms, or straight-chain or branched $C_1$ to $C_8$-alkyl which also carries at least one substituent $R^3$, or $-NR^4_2$ or

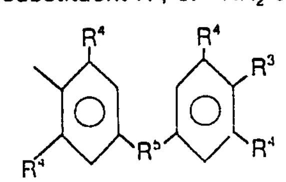
.

$R^3$ = $-OH$, $-SH$, $-NR^4_2$, $-COOH$ or $-SO_3H$,
$R^4$ = each independently of one another H or $C_1$- to $C_4$-alkyl,

$R^5$ 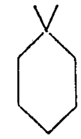 , $-CH_2-$, $CH_3-C-CH_2-CH_2-OH$,

$-C(CH_3)_2-$, $-C(CH_3)_2-C_6H_4-C(CH_3)_2-$
$R^6$ = $R^7-O-CH_2-CH(OH)-CH_2-X-R^1$,

$-R^7-OCH_2-CH-OCH_2$

and

$R^7$ = a phenylene or naphthylene radical which carries one or more $R^3$ and/or $R^4$ radicals, $C_1$- to $C_8$-alkylene which can carry one or more $C_1$- to $C_4$-alkyl radicals, or

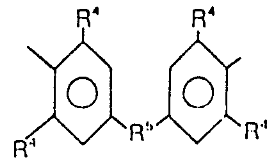

2. Process according to Claim 1, characterized in that, in the formula I, Y denotes $-CH_2-O-R^6$ and the alkyl or alkylene radicals which may be present have 1 to 4 carbon atoms.

3. Process according to Claim 1 or 2, characterized in that, in the formula I, X denotes O or NH.

4. Process according to one of Claims 1 to 3, characterized in that the coating has been produced by applying a mixture of at least one compound of the formula I defined above and at least one compound of the formula

$$CH_2-O-CH-CH_2-O-R^7-O-CH_2-CH-O-CH_2 \qquad II$$

in such quantities that the molar ratio of the compound of the formula I to the compound of the formula II is in the range from 10:1 to 1:1, and subsequently reacting the compounds with one another, $R^7$ having the meanings given above.

5. Use of a coating of one or more compounds of the formula

$$R^1-X-CH_2-CH(OH)-Y \qquad (I)$$

which, if appropriate, have also been subjected to a crosslinking reaction, where

$X$ = O, S, $NR^4$,
$Y$ = $-CH_2-O-R^6$,

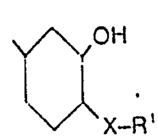
.
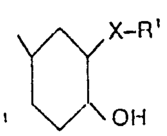

$R^1$ = $R^2-$, $R^2-CO-$, $R^2-C(=NR^4)-$, $R^2-SO_2-$
$R^2$ = a phenyl or naphthyl radical substituted by at least one $R^3$ radical or a radical of the heterocyclic ring which is optionally substituted by one or more $R^3$ radicals and which is derived from benzene, cyclopentadiene, indene, naphthalene or

their partially or completely hydrogenated analogues by substitution of one or more ring C atoms by nitrogen, sulphur and/or oxygen atoms, or straight-chain or branched $C_1$ to $C_8$-alkyl which also carries at least one substituent $R^3$, or $-NR^4_2$ or

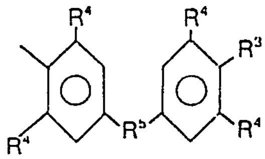

$R^3$ = $-OH$, $-SH$, $-NR^4_2$, $-COOH$ or $-SO_3H$,

$R^4$ = each independently of one another H or $C^1$- to $C_4$-alkyl,

$R^5$ = 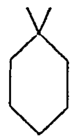 , $-CH_2-$, $CH_3-C-CH_2-CH_2-OH$,

$-C(CH_3)_2-$, $-C(CH_3)_2-C_6H_4-C(CH_3)_2-$

$R^6$ = $R^7-O-CH_2-CH(OH)-CH_2-X-R^1$,

$-R^7-OCH_2-CH-OCH_2$

and

$R^7$ = a phenylene or naphthylene radical which carries one or more $R^3$ and/or $R^4$ radicals, $C_1$- to $C_8$-alkylene which can carry one or more $C_1$- to $C_4$-alkyl radicals, or

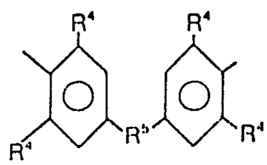

in the preparation of polymers of ethylenically unsaturated compounds by polymerization of these monomers by means of an initiator system which forms free radicals, if appropriate in the presence of conventional protective colloids and/or emulsifiers and, if appropriate, further conventional additives in a reactor, for inhibiting the formation of polymer deposits by coating the surfaces of the reactor which come into contact with constituents of the reaction mixture.

**Revendications**

1. Procédé pour la préparation de polymères de composés à insaturation éthylénique, par polymérisation de ces monomères à l'aide d'un système amorceur formant des radicaux libres, éventuellement en présence de colloïdes protecteurs et/ou d'agents émulsionnants habituels, et éventuellement d'autres additifs habituels, dans un réacteur dans lequel les surfaces entrant en contact avec les constituants du mélange réactionnel sont pourvues d'une enduction empêchant au moins la formation des dépôts de polymères, caractérisé en ce que l'enduction a été obtenue par application d'un ou plusieurs composés de formule

$$R^1-X-CH_2-CH(OH)-Y \qquad I$$

qui éventuellement ont encore été soumis à une réaction de réticulation, et où

X = O, S, $NR^4$

Y = $-CH_2-O-R^6$, 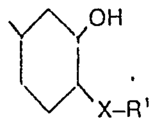 , 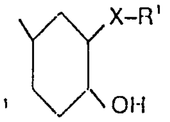

$R^1$ = $R^2-$, $R^2-CO-$, $R^2-C(=NR^4)-$, $R^2-SO_2-$

$R^2$ est un radical phényle ou naphtyle substitué par au moins un radical $R^3$, ou un résidu, éventuellement substitué par un ou plusieurs radicaux $R^3$, d'un hétérocycle dérivant, par remplacement d'un ou plusieurs atomes de carbone nucléaires par des atomes d'azote, de soufre et/ou d'oxygène, du benzène, du cyclopentadiène, de l'indène, du naphtalène ou de leurs analogues partiellement ou totalement hydrogénés, ou un radical alkyle en $C_1$ à $C_8$ à chaîne droite ou ramifiée, lequel comporte encore au point un substituant $R^3$, ou $-NR^4_2$, ou

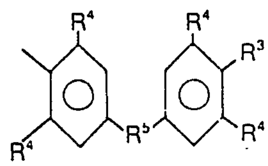

$R^3$ = $-OH$, $-SH$, $-NR^4_2$, $-COOH$, $-SO_3H$

les radicaux $R^4$, indépendamment les uns des autres, représentent chacun H ou un radical alkyle en $C_1$ à $C_4$

$R^5$ = 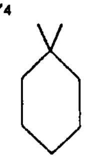 , $-CH_2-$, $CH_3-C-CH_2-CH_2-OH$,

$-C(CH_3)_2-$, $-C(CH_3)_2-C_6H_4-C(CH_3)_2-$

$R^6$ = $R^7-O-CH_2-CH(OH)-CH_2-X-R^1$,

$-R^7-OCH_2-CH-OCH_2$

et

$R^7$ est un radical phénylène ou naphtylène, comportant un ou plusieurs radicaux $R^3$ et/ou $R^4$, ou encore un radical alkylène en $C_1$ à $C_8$, lequel peut porter un ou plusieurs radicaux alkyle en $C_1$ à $C_4$, ou encore

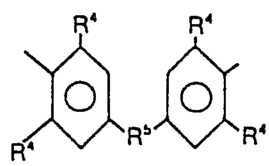

2. Procédé selon la revendication 1, caractérisé en ce que, dans la formule I, Y = $-CH_2-O-R^6$, et que les radicaux alkyle ou alkylène éventuellement présents possèdent de 1 à 4 atomes de carbone.

3. Procédé selon les revendications 1 ou 2, caractérisé en ce que, dans la formule I, X = O ou NH.

4. Procédé selon l'une des revendications 1 à 3, caractérisé en ce que l'enduction est réalisée par

application d'un mélange d'au moins un composé ayant la formule I définie ci-dessus et d'au moins un composé de formule

$$CH_2-O-CH-CH_2-O-R^7-O-CH_2-CH-O-CH_2 \quad II$$

en des quantités telles que le rapport en moles entre le composé de formule I et le composé de formule II soit compris entre 10:1 et 1:1, opération suivie d'une réaction des composés les uns sur les autres, $R^7$ ayant les significations données ci-dessus.

5. Utilisation d'une enduction constituée d'un ou plusieurs composés de formule

$$R^1-X-CH_2-CH(OH)-Y \quad I$$

qui ont été éventuellement encore soumis à une réaction de réticulation, où

X = O, S, $NR^4$

Y = $-CH_2-O-R^6$,

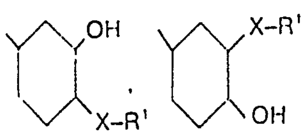

$R^1$ = $R^2$–, $R^2$–CO–, $R^2$–C(=$NR^4$)–, $R^2$–$SO_2$–

$R^2$ est un radical phényle ou naphtyle substitué par au moins un radical $R^3$, ou un résidu, éventuellement substitué par un ou plusieurs radicaux $R^3$, d'un hétérocycle dérivant, par remplacement d'un ou plusieurs atomes de carbone nucléaires par des atomes d'azote, de soufre et/ou d'oxygène, du benzène, du cyclopentadiène, de l'indène, du naphtalène ou de leurs analogues partiellement ou totalement hydrogénés, ou un radical alkyle en $C_1$ à $C_8$ à chaîne droite ou ramifiée, lequel comporte encore au point un substituant $R^3$, ou $-NR^4_2$, ou

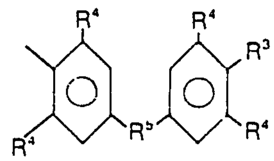

$R^3$ = –OH, –SH, $-NR^4_2$, –COOH, $-SO_3H$

les radicaux $R^4$, indépendamment les uns des autres, représentent chacun H ou un radical alkyle en $C_1$ à $C_4$

$R^5$ = 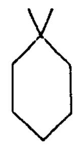, $-CH_2-$, $CH_3-C-CH_2-CH_2-OH$,

$-C(CH_3)_2-$, $-C(CH_3)_2-C_6H_4-C(CH_3)_2-$

$R^6$ = $R^7-O-CH_2-CH(OH)-CH_2-X-R^1$,

$-R^7-OCH_2-CH-OCH_2$

et

$R^7$ est un radical phénylène ou naphtylène, comportant un ou plusieurs radicaux $R^3$ et/ou $R^4$, ou encore un radical alkylène en $C_1$ à $C_8$, lequel peut porter un ou plusieurs radicaux alkyle en $C_1$ à $C_4$, ou encore

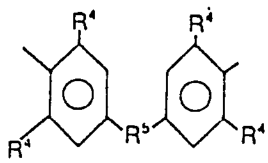

lors de la préparation de polymères de composés à insaturation éthylénique par polymérisation de ces monomères à l'aide d'un système amorceur formant des radicaux libres, éventuellement en présence de colloïdes protecteurs et/ou d'agents émulsionnants habituels, et éventuellement d'autres additifs habituels, dans un réacteur, pour empêcher la formation de dépôts de polymère, par enduction des surfaces du réacteur entrant en contact avec les constituants du mélange réactionnel.